# EUROPÄISCHE PATENTSCHRIFT

(11) **EP 2 063 045 B1**
(45) Veröffentlichungstag und Bekanntmachung des Hinweises auf die Patenterteilung: **03.01.2018**
(21) Anmeldenummer: 09003663.3
(22) Anmeldetag: 10.08.2007
(51) Int. Cl.: E04F 15/02, E04F 15/04, F16B 5/00

(54) **Fußbodenbelag**
Floor covering
Revêtement de sol

(30) Priorität: 10.08.2006 DE 102006037614; 30.03.2007 DE 202007000584 U
(43) Veröffentlichungstag der Anmeldung: 27.05.2009
(62) Teilanmeldung aus: 07801228.3
(73) Patentinhaber: Schulte, Guido, 59602 Rüthen-Meiste (DE)
(72) Erfinder: Schulte, Guido, 59602 Rüthen-Meiste (DE)
(74) Vertreter: Griepenstroh, Jörg

(56) Entgegenhaltungen:
- WO-A-03/016654
- WO-A-2006/043893
- DE-U1-202005 012 603

## Beschreibung

Die Erfindung betrifft einen Fußbodenbelag gemäß den Merkmalen im Oberbegriff des Patentanspruchs 1.

Fertigparkett, Echtholzböden oder Laminatfußböden bestehen aus mehreren Reihen von in ihrer Konfiguration vorwiegend rechteckigen Fußbodenpaneelen. Konventionell besitzen die Fußbodenpaneelen auf einer Längsseite und einer Kopfseite durchgehende Nuten und auf der jeweils gegenüber liegenden Längsseite bzw. Kopfseite durchgehende Federn, die an die Nuten formschlüssig angepasst sind. Durch die Verbindung von Nut und Feder werden die Fußbodenpaneele verlegt, wobei die Fußbodenpaneele zweier benachbarter Reihen versetzt zueinander angeordnet werden.

Bekannt ist es, an den Nuten und Federn mechanische Verriegelungsmittel auszubilden, welche bei in einem Fußbodenbelag benachbarten Fußbodendielen miteinander in rastenden Eingriff gelangen. Hierdurch soll eine Fugenbildung im verlegten Fußbodenbelag durch Dehnung oder Schrumpfungsvorgänge vermieden werden. An Nut und Feder der Fußbodenpaneele sind aneinander angepasste Verriegelungselemente in Form von Vertiefungen, Ausnehmungen oder Vorsprüngen ausgebildet, um verbundene Fußbodenpaneele in der zusammengefügten Lage leimlos zu halten.

Schwierig gestaltet sich mitunter der Montagevorgang der Paneelplatten. Sind nämlich die mechanischen Verriegelungselemente zwischen Nut und Feder erst einmal in einer Längs- oder Kopfseite ineinander verhakt, so bereitet es oft Schwierigkeiten, die formschlüssige Verbindung für die jeweils andere Seite zu schaffen. In der Regel werden die Fußbodenpaneele entlang ihrer Längsseiten ineinander gedreht oder geklickt und anschließend seitlich verschoben, so dass die Verriegelungsleisten an den Kopfseiten in Eingriff gelangen. Um dies zu erleichtern, können von der gegenüber liegenden Kopfseite her leichte Hammerschläge unter Zuhilfenahme eines Schlagklotzes angewandt werden. Hierbei besteht jedoch die Gefahr, dass es selbst bei sorgfältigstem Arbeiten zu Schäden an den Fußbodenpaneelen kommen kann.

Dieser Problematik wird im Rahmen der DE 20 2005 012 603 U1 dadurch Rechnung getragen, dass in den Kopfseiten der Paneelplatten Nuten vorgesehen sind, wobei die Nuten zweier aneinander stoßender Kopfseiten korrespondieren und einen Kanal ausbilden, in welchen nachträglich eine Feder eingeschoben wird, die den Stoß zwischen den beiden Paneelplatten überbrücken und dadurch die Verbindung zwischen den Paneelplatten stabilisiert. Die Feder stellt eine hohe Belastbarkeit des Stoßbereichs in vertikale Richtung sicher.

Ein ähnlicher Vorschlag ist Gegenstand der DE 101 38 285 A1. Dort wird beschrieben, dass ein den Stoß überbrückendes Sperrelement in eine dafür vorgesehene Sperrausnehmung durch Einschieben oder Einschlagen eingebracht werden kann. Es ist möglich, die Toleranzen des Sperrelements und der Sperrausnehmung so auszulegen, dass das Sperrelement sich leicht oder straff in Sperrausnehmung einfügen lässt.

Eine Alternative zum nachträglichen Einfügen des Sperrelements bzw. einer separaten Kopffeder wird in der EP 1 650 375 A1 vorgeschlagen. Bei dieser Lösung befindet sich in der einen kopfseitigen Nut eine Kopffeder aus einem elastischen Kunststoff. Die Kopffeder ist auf ihrer Oberseite angefast und weicht beim Ansetzen eines sich kopfseitig anschließenden Paneels vollständig in die sie haltende Kopfnut zurück und springt, bedingt durch die Federwirkung des Kunststoffes, in die korrespondierende Nut an der Kopfseite der angrenzenden Paneelplatte vor, so dass diese gegeneinander verriegelt werden. Auf diese Weise entfällt das nachträgliche Einfügen der Kopffeder.

Der Erfindung liegt die Aufgabe zugrunde, einen aus Elementplatten bestehenden Fußbodenbelag verlegetechnisch zu verbessern. Ferner soll ein hinsichtlich dieser Eigenschaft verbessertes Verlegeverfahren aufgezeigt werden.

Der gegenständliche Teil dieser Aufgabe wird durch die Merkmale des Patentanspruchs 1 gelöst. Vorteilhafte Weiterbildungen des Erfindungsgedankens sind Gegenstand der Unteransprüche.

Die Erfindung betrifft insbesondere die gegenseitige, vertikale wirkende Fixierung der Kopfseiten von Elementplatten, welche längsseitig mit einer leimfreien Nut-Feder-Verbindung versehen sind. Das Wirkprinzip basiert auf der Idee, dass durch den längsseitigen Einführungsvorgang der Kopffeder in die Kopfnut ein beweglicher Teil der Kopffeder seitlich ausgelenkt wird. Vorzugsweise gelangt dabei wenigstens ein Drittel der Länge der Kopffeder in Eingriff mit der benachbarten Kopfnut. Die verschiebbare Kopffeder muss dabei nicht einteilig ausgeführt sein, sondern kann aus verschiedenen Teilabschnitten gebildet sein.

Der Verschiebeweg in Längsrichtung der Kopfnut ist dabei vorzugsweise kleiner als 10 mm und im Idealfall so groß wie die Breite der längsseitigen Feder einer Elementplatte, d.h. beispielsweise 1,5 bis 4 mm. Dabei soll der aus der Kopfnut vorstehende Betätigungsabschnitt der Kopffeder nicht über die äußerste Kante des Elementpaneels, d.h. insbesondere nicht über eine untere Verriegelungsleiste vorstehen. In der verriegelten Position befindet sich die Kopffeder vollständig innerhalb der Kopfnut und schließt vorzugsweise bündig mit dem Nutgrund der längsseitigen Kuppelnut ab. Die Kopffeder kann mit ihrer Stirnseite daher auch an die Kontur des längsseitigen Nutgrunds angepasst sein.

Wesentlich ist, dass die Kopffeder in einer der Nuten vormontiert ist, möglichst nicht über die kopfseitige Nutmündung der Nut vorsteht und dadurch gewissermaßen vollständig innerhalb der Nut gekammert angeordnet ist, wobei lediglich ein Ende der Kopffeder über die Öffnung in der Längsseite der Elementplatte aus der Nut vorstehen soll. Dieses Ende kann auch als Betätigungsabschnitt bezeichnet werden, das dafür vorgesehen ist, eine Kraft in Längsrichtung der Nut auf die Kopffeder auszuüben, um diese zumindest teilweise in die korrespondierende Nut der benachbarten Elementplatte zu verlagern und dadurch die Elementplatten kopfseitig miteinander zu verriegeln.

Die Kopffeder besitzt im vormontierten Zustand eine Breite, die kleiner ist als die Breite des Sperrkanals. Wenn die Nuten in den Kopfseiten gleich tief sind, ist die Kopffeder maximal so breit wie eine der Nuten tief ist, das heißt maximal halb so breit wie der von den Nuten gebildete Sperrkanal. Selbstverständlich ist es möglich, die Nuten in den Kopfseiten unterschiedlich tief auszubilden. Beispielsweise kann die Nut, in welche der bewegliche Teil der Kopffeder eingreifen soll, aus konstruktiven Gründen nur 50 % der Tiefe der anderen Nut aufweisen.

Der wesentliche Vorteil des Fußbodenbelags ist, dass das nachträgliche Einschlagen oder Einschieben der Kopffeder in den Sperrkanal entfällt. Dieser Vorgang des nachträglichen Einschiebens ist nicht nur mit einem separaten Arbeitsschritt verbunden, sondern verlangt zudem auch Fingerspitzengefühl, da diese Tätigkeit je nach Position des Monteurs über Kopf, zumindest aber ausgesprochen bodennah durchgeführt wird. Wenn die Kopffeder allerdings in einer der Nuten vormontiert ist, entfallen die vorstehend beschriebenen Schritte des Einführens oder Einschlagens der Kopffeder vollständig, wodurch die Verlegegeschwindigkeit signifikant erhöht werden kann.

Ein weiterer Vorteil ist, dass die Kopffeder im vormontierten Zustand nicht über die Kopfseite der Elementplatte vorsteht, das heißt in keiner Weise hinderlich bei der Montage ist. Dadurch kann im Stoßbereich zwischen zwei Kopfseiten eine Elementplatte, die in die vorhergehende Längsseite einer bereits verlegten Elementplatte eingeschwenkt wird, anders als bei der Lösung in der EP 1 650 375 A1 ohne Kraftaufwand nach unten verschwenkt werden. Das Ausrichten der Kopfseiten in der Höhe führt noch nicht zu einem Verrasten im Bereich des Sperrkanals, so dass die einander benachbarten Paneele auch problemlos wieder aufgenommen werden können, falls dies aus verlegetechnischen Gründen erforderlich ist. Erst wenn eine weitere Reihe von Paneelen verlegt wird, erfolgt auch eine Verlagerung des überstehenden Endes der Kopffeder in die Nut hinein, mit der Folge, dass die Kopffeder zumindest teilweise von der einen Nut in die korrespondierende Nut der benachbarten Elementplatte verlagert wird. Auf diese Weise werden die den Sperrkanal bildenden Nuten bzw. die Stoßfuge zwischen den Elementplatten überbrückt und gegeneinander verriegelt.

Die Passungen der Kopffeder und der Nuten sind dabei derart aufeinander abgestimmt, dass das axiale Verschieben der Kopffeder möglichst leichtgängig ist. Das heißt, der verschiebbare Teil der Kopffeder sollte zwar vor dem Verschieben innerhalb der Nut gehalten sein, aber dennoch leicht verlagert werden können. Gleichzeitig sollte ein Spiel aber so klein sein, dass eine Höhenverlagerung der kopfseitig aneinander stoßenden Elementplatten weitestgehend ausgeschlossen wird. Um dieses Ziel zu erreichen ist es denkbar, dass diejenigen Bereiche der Kopffeder, die aus der ersten Nut heraustreten und in die korrespondierende Nut der benachbarten Elementplatte eingreifen, mit einer etwas engeren Passung versehen sind als die übrigen Bereiche der Kopffeder, die lediglich in Axialrichtung verlagert werden. Die Verlagerbarkeit kann über den Reibwert herabsetzende Zusatzstoffe oder Beschichtungen, die im Bereich der Kontaktflächen der Bauteile angeordnet oder appliziert sind, wie z.B. Wachse, Öle etc., verbessert werden.

Die Kopffeder kann in einer ersten Ausführungsform entgegen einer Federkraft verlagert werden, die bewirkt, dass die Kopffeder bei einem späteren Entriegeln wieder aus der endseitig aus der Nutmündung heraustritt, bzw. von der Kopfseite her betrachtet wieder vollständig in der Nut aufgenommen ist. Die Verriegelung erfolgt also gegen eine Federkraft, so dass die Kopffeder in der verriegelten Position unter Vorspannung steht. Die Federkraft kann dabei von einem separaten Federelement, wie z.B. einer Spiralfeder aufgebracht werden oder durch die Eigenspannung des für die Kopffeder verwendeten Werkstoffs selbst erreicht werden.

Für den Fall, dass die Kopffeder nicht durch eine weitere Elementplatte in die Verriegelungsposition gedrückt werden kann, ist eine manuelle Verriegelung erforderlich, beispielsweise, indem eine Fixierklemme in die längsseitige Kuppelnut der Elementplatte eingesetzt wird.

Die vorstehenden Ausführungen basieren auf der Annahme, dass die Nutmündung der Kopffeder in Höhe einer längsseitigen Kuppelnut liegt. Selbstverständlich ist es auch möglich, die kopfseitigen Nuten, bzw. die Sperrnut so anzuordnen, dass die Mündung, aus der die Kopffeder hervorragt im Bereich einer längsseitigen Verriegelungsleiste liegt. Entscheidend ist lediglich, dass die Kopffeder zur Verriegelung in Längsrichtung der Sperrnut verlagerbar ist.

Unter einer Kopfseite im Sinne der Erfindung ist eine Stirnseite einer Elementplatte zu verstehen. Die Kopfseite ist in der Regel die kürzere Seite der Elementplatte, wobei auch quadratische Elementplatten eine Kopfseite mit Kopffeder sowie Längsseiten besitzen.

In praktischer Umsetzung kann die Kopffeder beim Einschieben in die Nut auf eine Auflauffläche auflaufen, so dass die Kopffeder seitlich in Richtung der korrespondierenden Nut verlagert wird. Eine solche Auflauffläche kann in der Elementplatte bzw. der Nut selbst ausgebildet sein, indem ein Teilbereich des Nutgrundes oder auch der gesamte Nutgrund insbesondere angeschrägt ist. Mit anderen Worten wird die Nuttiefe über die Längsersteckung variiert. Wenn die Nuttiefe kontinuierlich zunimmt, kann die Kopffeder gewissermaßen als Keil ausgebildet sein, wobei dessen der Nutmündung zugewandte Längsseite beim Verschieben in Axialrichtung gleichmäßig aus der Nut austritt und in die korrespondierende Nut der benachbarten Elementplatte eingreift. Die Auflauffläche ist in diesem Fall eine Keilfläche. Wichtig hierbei ist, dass die Nuttiefe so bemessen ist, dass die Kopffeder im verriegelten Zustand nicht selbständig wieder aus der korrespondierenden Nut heraus rutschen kann. Entsprechend ist die Steigung der Auflauffläche bzw. Keilfläche auf den maximalen Verschiebeweg, das heißt auf die Länge des aus der Nut überstehenden Endes abgestimmt.

Grundsätzlich ist es möglich, die Auflauffläche auch gerundet auszuführen, so dass die Auflauffläche nicht zwangsläufig linear gerade sein muss. Entscheidend ist die Funktion der Auflauffläche, nämlich, dass sie als konturiertes Widerlager dient, um eine seitliche Verlagerung der Kopffeder bei deren Längsverschiebung zu bewirken.

Da Fußbodenbeläge häufig aus einem Holzwerkstoff bestehen und daher einen relativ hohen Reibwert innerhalb der Nut aufweisen, kann es von Vorteil sein, wenn die Auflauffläche Bestandteil eines in der Nut angeordneten Keilkörpers der Kopffeder ist. Das heißt, dass die Kopffeder zweiteilig aufgebaut ist, wobei die Kopffeder in einen Keilkörper und in einen Schubabschnitt gegliedert ist. Als Schubabschnitt wird derjenige Längenabschnitt der Kopffeder bezeichnet, der das aus der Nut vorstehende Ende trägt. Je nach Anordnung der Auflauffläche ist es möglich, dass entweder der Schubabschnitt oder aber der Keilkörper zumindest teilweise in die korrespondierende Nut verlagert wird.

Da eine kopfseitige Abstützung der Elementplatten insbesondere im mittleren Bereich der Kopfseite angestrebt wird, können der Keilkörper und der Schubabschnitt etwa die gleiche Länge besitzen, so dass die Auflauffläche und damit der zu verlagernde Bereich des Keilkörpers bzw. des Schubabschnitts ebenfalls im mittleren Bereich der Kopfseite angeordnet sind. In einer bevorzugten Ausführungsform soll etwa das mittlere Drittel der Sperrnut zumindest abschnittsweise verriegelt werden, insbesondere wenn die Elementplatte mit einer Fase versehen ist. Dadurch ist die Reibung der Kopffeder beim Verlagern geringer als wenn sie auf der gesamten Länge der Nut vorspringt.

Bei scharfkantigen Elementplatten oder Breiten von mehr als 200 mm ist es hingegen zweckmäßig, wenn mehrere Teilelemente aus der Nut heraustreten und eine Verriegelung insbesondere auch in den Eckbereichen des Kopfstoßes sicherstellen

Eine alternative Möglichkeit, um den kopfseitigen Stoß im Bereich des Sperrkanals zu überbrücken, wird darin gesehen, dass entweder der Schubabschnitt oder der Keilkörper durch gegenseitigen Wirkeingriff in Richtung zur korrespondierenden Nut aufgespreizt werden bzw. aufspreizbar gestaltet sind. Dabei wird beispielsweise der Schubabschnitt keilförmig in den widergelagerten Keilkörper eingeführt, so dass der Schubabschnitt zwischen zwei Federzungen greift, von denen eine in Richtung der korrespondierenden Nut verlagert wird. Diese Anordnung hat den Vorteil, dass die Federwirkung der Federschenkel den Schubabschnitt wieder zurück drängen kann, falls der Fußbodenbelag wieder aufgenommen werden muss. Durch das Zurückdrängen wird die Verriegelung zwischen den Kopfseiten automatisch aufgehoben und das Betätigungsende der Kopffeder wieder aus der Nut gedrückt, so dass der Fußbodenbelag auch ein zweites Mal wieder verlegt werden kann.

In einer weiteren Ausführungsform ist vorgesehen, dass die die Kopffeder aufnehmende Nut wenigstens eine Ausnehmung aufweist, in welcher die Auflauffläche ausgebildet ist und in welche ein Nocken der Kopffeder eingreift. Das heißt, dass die Nut mit einer zusätzlichen Konturierung in Form einer Ausnehmung zur Ausbildung einer Auflauffläche versehen ist. Diese Ausgestaltung hat fertigungstechnische Vorteile, da einerseits eine durchgängige stirnseitige Nut hergestellt werden kann, in welche lediglich noch die Ausnehmung eingebracht werden muss. Die Ausnehmung selbst ist im Nutgrund vorgesehen. Die Ausnehmung kann insbesondere durch einen Sägeschnitt hergestellt werden, so dass die Ausnehmung die Kontur eines Kreisabschnitts hat. Dieser Kreisabschnitt kann in seinen Übergangsbereichen zum Nutgrund auch gerundet sein, so dass sich gewissermaßen eine Sinusform der Ausnehmung ergibt. Dies ist nicht zuletzt fertigungstechnisch bedingt, da sich während der Bearbeitung die einzelnen Elementplatten parallel zu dem Sägeblatt, welches zum Einbringen der Ausnehmung verwendet wird, bewegen. Wenn diese Bewegung nicht absolut synchron erfolgt, kommt es zu Verwischungen im Kantenbereich und damit zu gerundeten Übergängen.

Theoretisch ist es auch denkbar, dass die Ausnehmung eine rechteckig konfigurierte Tasche ist, die durch einen Fingerfräser erzeugt wird oder auch nur eine Bohrung im Nutgrund ist, wobei die Auflauffläche einer Bohrung auf den Bohrungsrand beschränkt wird, so dass der in diesem Fall in die Bohrung ragende Nocken nur punktuell mit der Auflauffläche in Kontakt kommt.

Grundsätzlich ist vorgesehen, dass der Nocken einen möglichst geringen Reibungswiderstand erzeugt. Daher ist vorgesehen, dass der wenigstens eine Nocken schmaler als die Kopffeder ist. Der Nocken selbst kann keilförmig oder auch gerundet gestaltet sein. Maßgeblich ist, dass der Nocken derart gestaltet ist, dass er ein Gleiten auf der Auflauffläche ermöglicht und nicht behindert wird. Insofern sollte der der Auflauffläche zugewandte Bereich des Nockens zumindest abschnittsweise gleichsinnig orientiert sein wie die Auflauffläche.

Theoretisch ist es ausreichend, die Kopffeder mit nur einem einzigen Nocken zu versehen, wobei es von Vorteil ist, wenigstens zwei Nocken vorzusehen, da in diesem Fall eine Parellelverschiebung der Kopffeder möglich ist. Insbesondere kann die Kopffeder an ihrem über die Nut vorstehenden Ende einen Nocken aufweisen. Dieser Nocken läuft dann auf der Ecke der Nut auf bzw. gleitet an dieser Ecke entlang, so dass die Kopffeder aus der Nut herausbewegt wird. Dieser Nocken ist vorzugsweise keilförmig konfiguriert.

Die Kopffeder selbst kann zur Reduzierung der Reibung gewellt konfiguriert sein, wobei ihre gewellten Seiten der Dekorseite und der Unterseite der Elementplatte zugewandt sind. Zusätzlich kann die Kopffeder Klemmzapfen aufweisen, über welche die Kopffeder punktuell klemmend in der Nut gehalten ist. Die Klemmzapfen dienen als zusätzliche Transportsicherung und besitzen einen sehr kleinen Querschnitt. Sie sind lediglich dafür vorgesehen, der Kopffeder einen festen Halt vor dem Verschieben bzw. Einrasten zu verleihen. Zusätzlich kann die Kopffeder an einer ihrer Längsseiten eine Fasung aufweisen, die das Einführen der Kopffeder in die Nut der angrenzenden Elementplatte während des Verriegelungsvorgangs erleichtert.

Im Hinblick auf die Erstverlegung wird es als zweckmäßig angesehen, wenn eine bezüglich ihrer Wirkbestandteile zweiteilig aufgebaute Kopffeder eine Sollbruchstelle aufweist, über welche die Wirkbestandteile, das heißt der Schubabschnitt und der Keilkörper miteinander verbunden sind. Auf diese Weise wird sichergestellt, dass während des Transports und der Montage kein Bestandteil der Kopffeder unbeabsichtigt aus der Nut heraus fällt. Beim Einschieben der Kopffeder in die Nut, das heißt während der Montage soll die Sollbruchstelle selbstverständlich zerstört werden.

Im Rahmen der Erfindung ist es auch denkbar, dass die Kopffeder aus einem federelastischen Kunststoff besteht und durch Verschieben des überstehenden Endes in die Nut hinein bogenförmig gekrümmt wird, so dass der bogenförmig gekrümmte Abschnitt mit der benachbarten Elementplatte in Eingriff gelangt. Auch bei dieser Konfiguration bewirkt das Zurückfedern des verwendeten Kunststoffes, dass die Kopffeder wieder vollständig in ihre ursprüngliche Nut gelangt, so dass der Fußbodenbelag auch nachträglich problemlos wieder aufgenommen werden kann.

In einer weiteren Variante ist vorgesehen, dass die Kopffeder zwei über ein Gelenk miteinander verbundene Schenkel aufweist, wobei der das Gelenk umgebende Bereich der Schenkel beim Verschieben des überstehenden Endes in die Nut hinein mit der korrespondierenden Nut der Elementplatte in Eingriff bringbar ist. Bei einem Kunststoffwerkstoff kann es sich bei dem Gelenk um ein Filmgelenk handeln. Diese Ausführungsform hat den Vorteil, dass die Kraft zum Verlagern der Kopffeder geringer ist, als bei einer Kopffeder, die insgesamt bogenförmig gekrümmt werden muss. Eine Krümmung der Schenkel erfolgt bei diesem Ausführungsbeispiel nicht. Lediglich das (Film-)Gelenk zwischen den Schenkeln wird gebeugt, wobei die hierzu erforderliche Kraft minimal ist. Das Gelenk kann allerdings auch eine Rückstellkraft aufweisen, die so groß ist, dass die Kopffeder insgesamt wieder in die ursprüngliche Nut zurückfedern kann.

Der erfindungsgemäße Fußbodenbelag kann kopfseitig grundsätzlich manuell verriegelt werden. Das heißt, dass nach dem Verlegen einer Paneelreihe von Hand und mit Hilfe von Handwerkzeugen, wie z.B. mit Hilfe eines Zugeisens, auf das Ende der Kopffeder gedrückt werden kann, um diese vollständig in der Nut zu versenken und um die Stoßfuge im Bereich des Sperrkanals zu überbrücken.

Als besonders vorteilhaft wird es angesehen, wenn die kopfseitige Verriegelung quasi selbsttätig durch das Anlegen einer weiteren Reihe von Elementplatten erfolgt, welche den rückseitigen Stoßbereich der vorhergehend verlegten Elementplattenreihe überbrücken. Die Kopfseiten werden erst dann verrastet, wenn eine weitere Elementplatte mit den Längsseiten der vorhergehenden Paneelreihe in Eingriff gelangt und dabei mit ihrer Längsseite ein aus der Nut überstehendes Ende der Kopffeder in die Nut schiebt, so dass diese quer zur Einschubrichtung in die gegenüber liegende Nut der anderen Kopfseite eingreift und die Elementplatten kopfseitig miteinander verriegelt.

Wenn die Kopffeder so konfiguriert ist, dass sie bei einer Entlastung wieder in die ursprüngliche Nut zurückgeführt wird, das heißt wenn das Ende der Kopffeder selbständig wieder aus der Nut hervortritt, kommt dies einer selbsttätigen Entriegelung beim Aufnehmen des Bodenbelags gleich. Dies ist ebenfalls ein entscheidender Vorteil gegenüber bekannten Verlegeverfahren, bei denen die Kopffeder entweder durch Verschieben der Elementplatten gegeneinander entfernt werden muss.

In einer weiteren Ausführungsform ist vorgesehen, dass die Kopffeder aus mehreren Teilen besteht, die jedoch über ein Verbindungselement unverlierbar miteinander verbunden sind. Beispielsweise kann das Verbindungselement eine über die Nut vorstehende Leiste sein, die nach dem Einsetzen der Kopffeder in die Nut noch über die Nut vorsteht und erst im Rahmen einer Endbearbeitung abgefräst oder -gesägt wird, so dass in der Nut nur noch nicht miteinander verbundene Teile der Kopffeder verbleiben. Diese Vorgehensweise vereinfacht die Handhabung der Kopffeder während des Fertigungsprozesses.

Grundsätzlich ist es auch denkbar, bei Elementplatten hinreichender Dicke innerhalb der Nut zusätzliche Führungsmittel für die Kopffeder anzuordnen, wie beispielsweise Führungshülsen, in denen gewissermaßen die Kopffeder als Bolzen verschoben werden kann.

Die Kopffeder sollte im unverriegelten Zustand nicht über eine Dekor- oder Deckschicht der Elementplatte vorstehen, d.h. von oben betrachtet nicht sichtbar sein, damit sie beim Transport und der Handhabung der Elementplatten nicht hinderlich ist.

Der Werkstoff für die Kopffeder kann sowohl ein Holzwerkstoff sein, d.h. es kann sich um Holz oder einen Holzfasern enthaltenden Werkstoff handeln. Metalle und Metalllegierungen kommen ebenso in Frage wie Verbundwerkstoffe. Der Einsatz von Bimetallen oder Mischkunststoffen ist ebenso möglich wie die Verwendung von Werkstoffen auf Basis thermoplastischer oder duroplastischer Kunststoffe. Die Kopffeder kann insbesondere aus einem faserverstärkten Kunststoff mit einem Faseranteil von 20% bis 60 % bestehen.

Der Erfindungsgedanke ist auf alle Bodensysteme anwendbar, bei denen ein Oberbelag auf einem Träger angeordnet ist, wie beispielsweise Echtholzbeläge, Laminat, Träger mit lackierten Oberflächen als Oberbelag, Linoleum , Kork auf Trägerplatten etc. Die Deckschicht kann insbesondere aus einem Dekorpapier mit Overlay bestehen, welches die Optik der Elementplatte bestimmt. Bei dem Fußbodenbelag kann es sich somit um einen Parkettboden, einen Fertigparkettboden, einen Echtholzboden oder einen Laminatfußboden handeln.

Die Erfindung wird nachfolgend anhand der in den schematischen Zeichnungen dargestellten Ausführungsbeispiele näher erläutert. Es zeigen:
- Figur 1: in der Draufsicht einen Ausschnitt aus einem Fußbodenbelag;
- Figur 2: in der Seitenansicht einen Vertikalschnitt durch den kopfseitigen Stoßbereich zwischen zwei Elementplatten gemäß der Linie II-II in der Figur 1;
- Figur 3: eine perspektivische Ansicht des Eckbereichs einer Elementplatte in Blickrichtung auf die Kopfseite;
- Figuren 4 bis 10: unterschiedliche Ausführungen von Kopffedern jeweils in der Draufsicht;
- Figuren 11 und 12: eine perspektivische Ansicht des Eckbereichs einer Elementplatte mit einer Kopffeder;
- Figuren 13 und 14: eine perspektivische Ansicht eines Mittelabschnitts einer Kopffeder;
- Figuren 15 bis 17: in perspektivischer Ansicht und in Schnittdarstellungen eine weitere Ausführungsform einer Kopffeder;
- Figuren 18 und 19: zwei weitere Ausführungen von Kopffedern innerhalb einer Elementplatte, die teilweise geschnitten dargestellt ist und
- Figur 20: die Ansicht X-X der Figur 19.

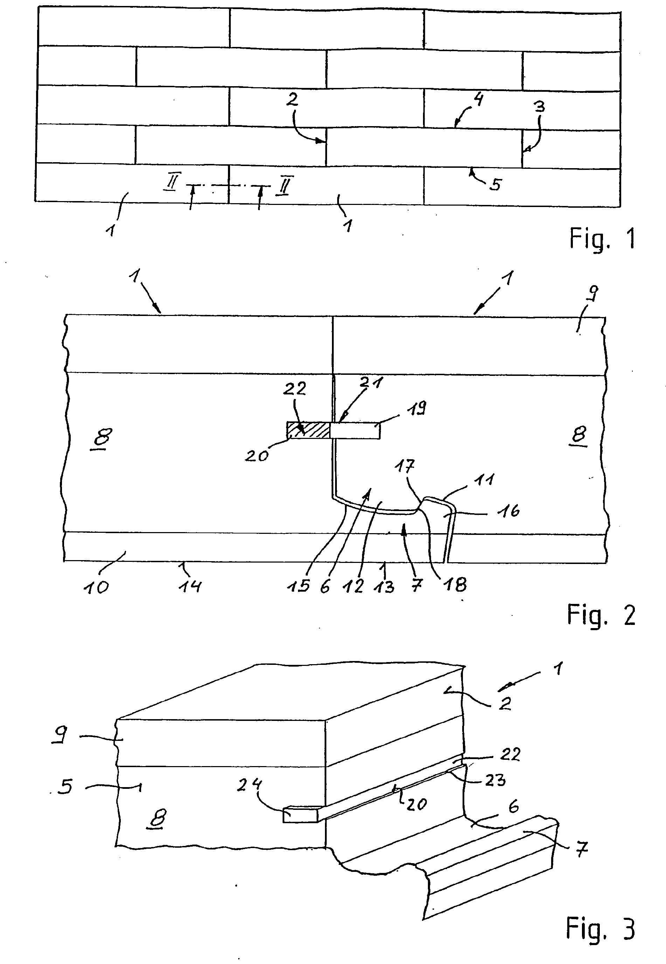

Figur 1 zeigt einen Fußbodenbelag, bestehend aus einer Vielzahl von im Verbund verlegten rechteckigen Paneelplatten 1. Die Paneelplatten 1 weisen jeweils an ihren Kopfseiten 2, 3 und an ihren Längsseiten 4, 5 Verriegelungsleisten auf. Die Verriegelungsleisten gelangen in der Montagelage bei in einem Belag benachbarten Paneelen miteinander in Eingriff.

Verriegelungsleisten 6, 7 an den Kopfseiten 2 bzw. 3 einer Elementplatte 1 erkennt man in der Figur 2. In der Figur 2 ist dargestellt ein Vertikalschnitt durch den kopfseitigen Stoßbereich zwischen zwei Elementplatten 1, so dass man auf die Verbindung an den Kopfseiten 2, 3 schaut. Die nicht dargestellten Verriegelungsleisten an den Längsseiten einer Elementplatte 1 können anders konfiguriert sein als die Verriegelungsleisten 6, 7.

Eine Elementplatte 1 besteht aus einer Tragschicht 8 aus Fasermaterial, üblicherweise aus einer hoch- oder mittelverdichteten Faserplatte, wobei die Tragschicht 8 eine oberseitige Deckschicht 9 und einen unterseitigen Gegenzug 10 aufweist. Die Deckschicht 9 kann aus einem Dekorpapier mit einer Overlay bestehen, welches die Optik der Fußbodenpaneele 1 bestimmt. Das sogenannte Overlay bzw. die Versiegelung bildet eine spezialbeharzte Nutzschicht, die der Fußbodenpaneele 1 eine hohe Oberflächenstrapazierfähigkeit verleiht. Der Gegenzug 10 auf der Unterseite der Tragschicht 8 dient der Formstabilität und der Feuchtigkeitsabsperrung.

Jede Elementplatte 1 weist eine Verriegelungsleiste 6 (1. Verriegelungsleiste) an der einen Kopfseite 2 (1. Kopfseite) und eine Verriegelungsleiste 7 (2. Verriegelungsleiste) an der gegenüber liegenden Kopfseite 3 (2. Kopfseite) auf. Die 1. Verriegelungsleiste 6 besitzt einen nach unten offenen 1. Kuppelkanal 11 sowie einen nach unten gerichteten endseitigen 1. Kuppelwulst 12. Die 2. Verriegelungsleiste 7 an der gegenüber liegenden 2. Kopfseite 3 einer Elementplatte 1 ist bodenseitig angeordnet und springt gegenüber der Tragschicht 8 vor. Die Unterseite 13 der 2. Verriegelungsleiste 7 verläuft in der Ebene der Unterseite 14 der Elementplatte 1. Die 2. Verriegelungsleiste 7 weist einen nach oben offenen 2. Kuppelkanal 15 sowie einen nach oben gerichteten endseitigen 2. Kuppelwulst 16 auf.

Bei in Eingriff stehender 1. Verriegelungsleiste 6 und 2. Verriegelungsleiste 7 greift der 1. Kuppelwulst 12 in den 2. Kuppelkanal 15 und der 2. Kuppelwulst 16 in den 1. Kuppelkanal 11. Hierbei kontaktieren sich die einander zugewandten und in die gleiche Richtung geneigt verlaufenden Flanken 17, 18 des 1. Kuppelwulstes 12 und des 2. Kuppelwulstes 16. Es entsteht auf diese Weise ein Druckpunkt an den Flanken 17, 18, der eine Kraft bewirkt, die ein Gegeneinanderziehen der beiden Elementplatten 1 im Bereich der Deckschicht 9 erzeugt, so dass der Übergang im Stoßbereich der beiden Fußbodenpaneele 1 an der Deckschicht 9 quasi fugenlos ist.

In den Kopfseiten 2, 3 der Elementplatten 1 sind Nuten 19, 20 ausgebildet, die sich über die gesamte Länge der Kopfseiten 2, 3 erstrecken. Wie anhand der Figur 2 zu erkennen, korrespondieren die Nuten 19, 20 der aneinander stoßenden Kopfseite 2, 3 und bilden einen Sperrkanal 21 aus. In diesen Sperrkanal 21 ist eine schraffiert dargestellte Kopffeder 22 eingeschoben. Die Nuten 19, 20 in den Kopfseiten 2, 3 sind oberhalb der Verriegelungsleisten 6, 7 in der Tragschicht 8 vorgesehen.

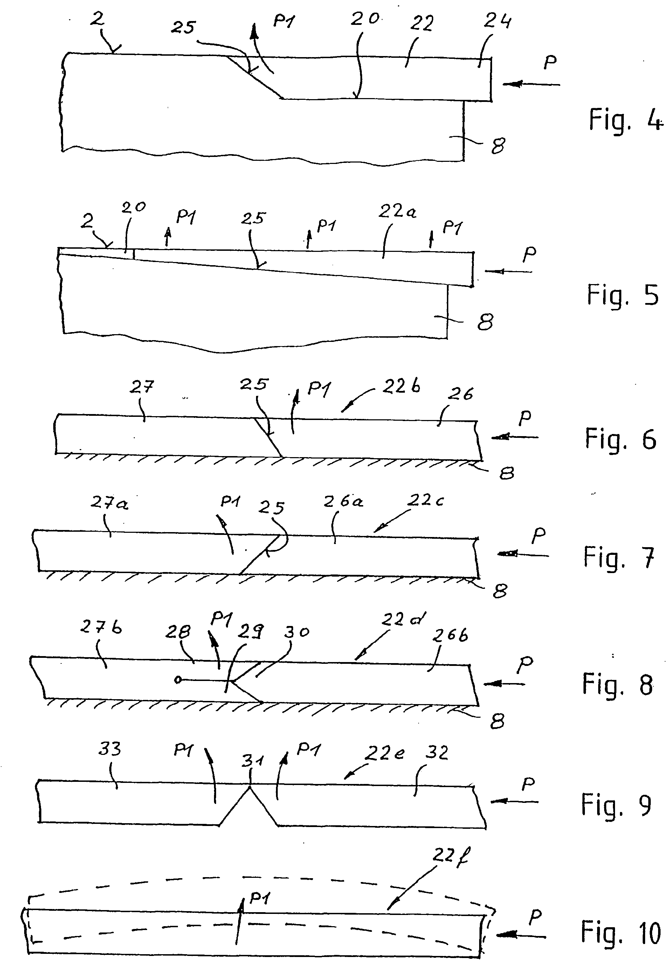

Figur 3 zeigt eine perspektivische Darstellung in Blickrichtung auf die Kopfseite 2 einer Elementplatte 1. Aus dieser Darstellung geht hervor, dass die Kopffeder 22 in der vormontierten Position vollständig innerhalb der Nut 20 angeordnet ist und insbesondere nicht über die kopfseitige Nutmündung 23 vorsteht. Allerdings ragt die Kopffeder 22 mit ihrem Ende 24 im Bereich der Längsseite 5 aus der Nut 22 hervor. In Figur 3 ist lediglich beispielhaft dargestellt, wie die Kopffeder 22 in der Nut 20 angeordnet ist. Die Funktionsweise sowie mögliche Ausführungsformen der Kopffeder wird nachfolgend anhand der Figuren 4 bis 10 erläutert.

Figur 4 zeigt, dass die Kopffeder 22 beim Einschieben in die Nut 20 in Richtung des Pfeils P auf einer Auflauffläche 25 in Form einer Keilfläche aufläuft und folglich in Richtung des Pfeils P1 aus der Nut 20 heraus geschwenkt wird und dadurch in nicht näher dargestellter Weise mit der korrespondierenden Nut 19 der benachbarten Elementplatte 1 in Eingriff gelangt, wie anhand der Darstellung der Figur 2 zu erkennen ist. Das besondere bei der Ausführungsform der Figur 4 ist, dass sich die Nut 20 nicht über die gesamte Länge der Kopfseite 2 erstreckt, so dass die Auflauffläche 25 unmittelbar durch den Nutgrund gebildet wird.

In dem Ausführungsbeispiel der Figur 4 ist nur ein Teil des Nutgrundes als Auflauffläche 25 ausgebildet. Es ist aber auch denkbar, dass der gesamte Nutgrund als Auflauffläche 25 fungiert, wie in Figur 5 zu erkennen ist. In diesem Fall schwenkt nicht nur ein endseitiger Bereich der Kopffeder 22 aus der Nut 20 heraus. Vielmehr wird die gesamte, keilförmig konfigurierte Kopffeder 22a gewissermaßen parallel zur Kopfseite 2 aus der Nut 20 heraus bewegt. Dies wird durch die eingezeichneten Pfeile P1 symbolisiert.

Die Ausführungsform der Figur 6 zeigt eine Variante mit einer zweiteiligen Kopffeder 22b, die einen Schubabschnitt 26 und einen Keilkörper 27 umfasst. Schubabschnitt 26 und Keilkörper 27 stoßen in Analogie zur Ausführungsform der Figur 4 im Bereich der Keilfläche 25 aneinander, so dass durch Verlagerung des Schubabschnitts 26 in Richtung des Pfeils P das innen liegende Ende des Schubabschnitts 26 quer zur Richtung des Pfeils P in die nicht näher dargestellte Nut der anderen Elementplatte 1 verschwenkt wird. Der Pfeil P1 verdeutlicht die Schwenkrichtung.

Figur 7 zeigt eine Variante einer zweiteiligen Kopffeder 22c, bei welcher die Auflauffläche 25 mit umgekehrter Neigung an einem Keilkörper 27a angebracht ist, so dass die Verlagerung des Schubabschnitts 26a in Richtung des Pfeils P ein Verlagern des Keilkörpers 27a in Richtung des Pfeils P1 bewirkt. Die Verriegelung erfolgt daher nicht über den Schubabschnitt 26a, sondern über den Keilkörper 27a.

In Figur 8 ist ein Keilkörper 27b einer Koppelfeder 22d dargestellt, dessen dem Schubabschnitt 26b zugewandtes Ende V-förmig konfiguriert ist. In dieses V-förmige Ende greift eine formschlüssig angepasste Spitze 30 des Schubabschnitts 26b. Das V-förmige Ende wird von zwei Federschenkeln 28, 29 gebildet, die durch die Spitze 30 des Schubabschnitts 26b bei Verlagerung in Richtung des Pfeils P auseinander gedrängt werden, so dass der eine Federschenkel 28 quer zur Schubrichtung aus der Nut 20 heraus gedrängt und zur Verriegelung in die Nut 20 der benachbarten Elementplatte 1 verlagert wird. Gleichzeitig gelangt auch ein Teilbereich der Spitze 30 des Schubabschnitts mit der korrespondierenden Nut der benachbarten Elementplatte 1 in Eingriff.

Figur 9 zeigt eine Variante einer Kopffeder 22e aus einem Kunststoffmaterial. Die Kopffeder 22e umfasst zwei über ein Gelenk 31 miteinander verbundene Schenkel 32, 33. Im Bereich des Gelenks 31 sind die Schenkel 32, 33 abgeschrägt, so dass sich eine V-förmige Einkerbung in der Kopffeder 22e ergibt. Durch diese Einkerbung und durch die Positionierung des Gelenks 31 können die Schenkel 32, 33 relativ zueinander verlagert werden, so dass der Bereich des Gelenks 31 in die Nut der benachbarten Elementplatte 1 gedrückt werden kann und somit zur vertikalen Verriegelung der einander benachbarten Paneele beiträgt.

Figur 10 zeigt schließlich eine Ausführungsform einer Kopffeder 22f aus einem elastischen Material, das ohne Keilflächen und Gelenke ausschließlich durch Kraftausübung in Richtung der Längsachse der Koppelfeder 22f bogenförmig gekrümmt werden kann, so dass der bogenförmige Abschnitt mit der korrespondierenden Nut der benachbarten Elementplatte in Eingriff gelangt. Die Ausführungsformen der Figuren 8 bis 10 haben insgesamt den Vorteil, dass durch eine Federwirkung eine automatische Rückstellung der Kopffeder in die ursprüngliche Nut möglich ist.

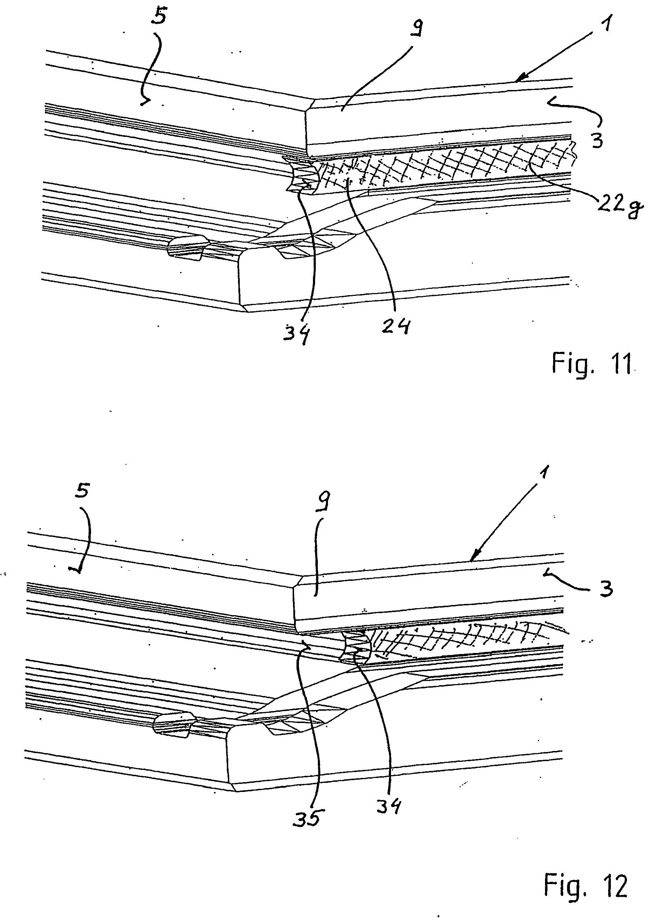

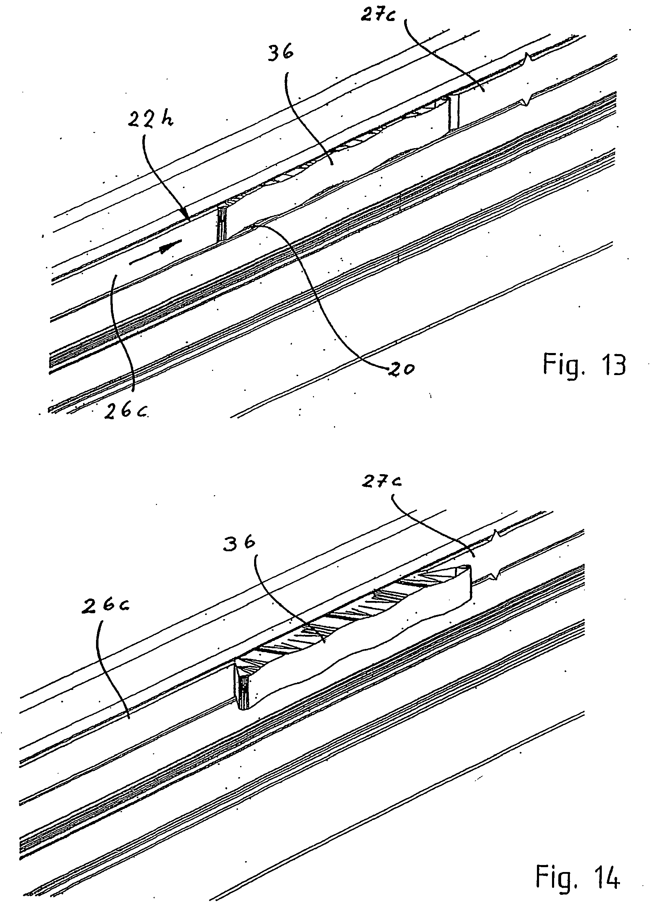

Die Figuren 11 und 12 zeigen das Ende 24 einer Kopffeder 22g in der unverriegelten Position (Figur 11) und in der verriegelten Position (Figur 12). Aus den Darstellungen wird deutlich, dass die Stirnseite 34 des überstehenden Endes 24 der Kopffeder 22g an die Kontur des längsseitigen Kuppelkanals 35 angepasst, d.h. in diesem Fall konkav ausgeführt ist. Des Weiteren ist zu erkennen, dass die Kopffeder 22g im unverriegelten Zustand nicht über die Dekor- oder Deckschicht 9 der Elementplatte 1 vorsteht, so dass die Kopffeder 22g von oben betrachtet nicht sichtbar ist und keinerlei Hindernis beim Transport, der Handhabung und dem Verlegen der Elementplatten 1 ist. Die Figuren 13 und 14 zeigen eine Variante einer Kopffeder 22h, die dreiteilig aufgebaut ist. Ein hinterer Teil der Kopffeder 22h ist in den Nutflanken der Nut 20 verkrallt, so dass er sich nicht in Längsrichtung der Nut 20 verlagern kann. Der hintere Teil kann auch als Keilkörper 27c bezeichnet werden.

Der Keilkörper 27c dient als Widerlager für einen trapezförmig konfigurierten Mittelabschnitt, der als Sperrkörper 36 fungiert. Im Unterschied zu den vorhergehenden Ausführungsformen wird bei dieser Variante allerdings nicht der in Längsrichtung verlagerbare Schubabschnitt 26c seitlich aus der Nut heraus verlagert sondern lediglich der Sperrkörper 36, der sowohl auf einer Keilfläche am Keilkörper 27c als auch an einer Keilfläche am Schubabschnitt 26c abgestützt ist.

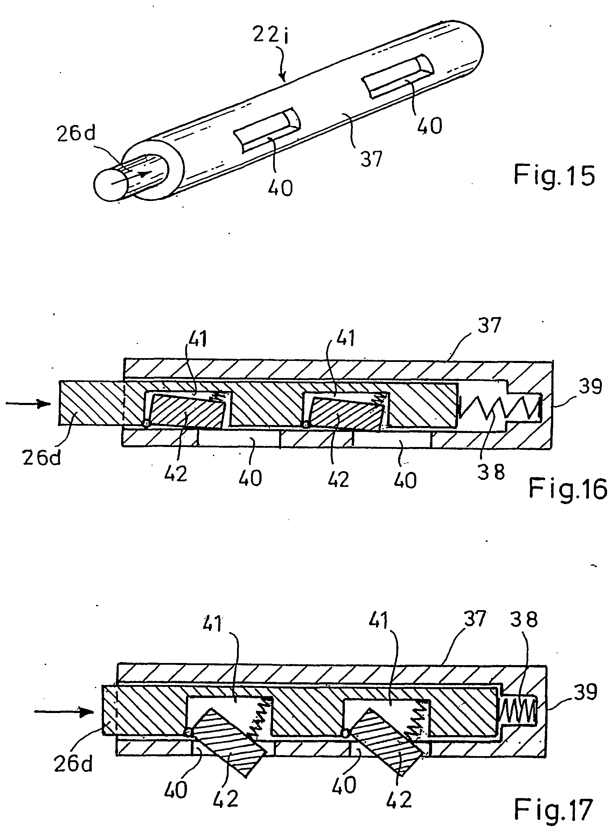

In den Figuren 15 bis 17 wird eine Variante einer Kopffeder 22i dargestellt, die einen Schubabschnitt 26d und eine den Schubabschnitt 26d führende Hülse 37 umfasst. Der Schubabschnitt 26d kann gegen die Federkraft einer Feder 38 innerhalb der Hülse 37 verlagert werden. Die Feder 38 stützt sich dabei an einem Boden 39 der Hülse 37 ab. Die Hülse 37 weist seitliche Öffnungen 40 auf, die so angeordnet sind, dass in Taschen 41 des Schubabschnitts 26d gelagerte Sperrkörper 42 unter dem Einfluss einer Federkraft aus den Öffnungen heraus geschwenkt werden können und dadurch in nicht näher dargestellter Weise in eine Nut einer benachbarten Elementplatte eingreifen, um eine kopfseitige Verriegelung der benachbarten Elementplatten herbeizuführen. Diese Art der Kopffeder 22i kann als vormontierte Einheit insbesondere bei dickeren Elementplatten zum Einsatz kommen und ermöglicht eine zuverlässige und reversible Verriegelung zwischen den kopfseitigen Nuten.

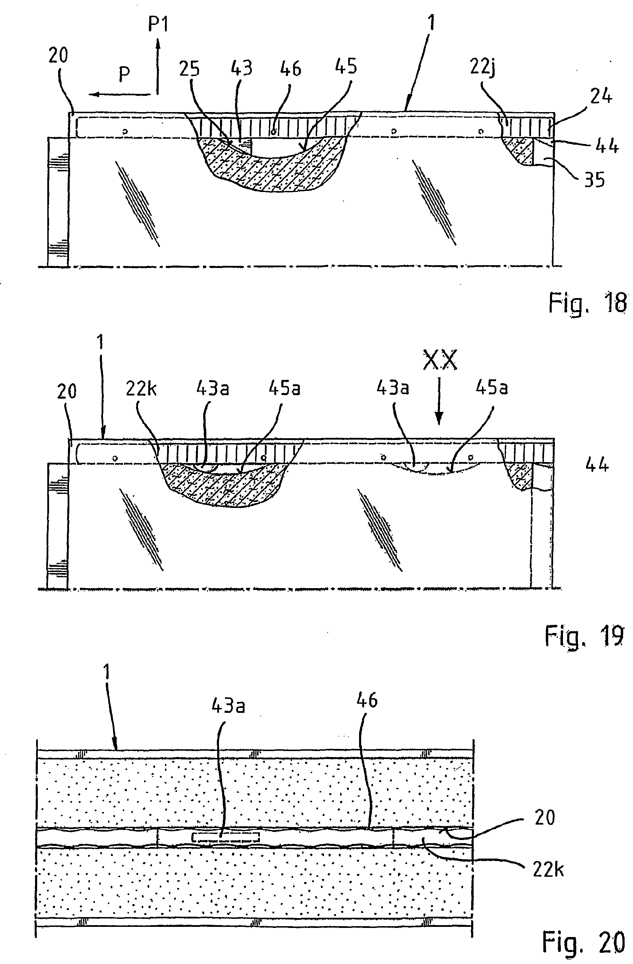

In Figur 18 wird eine Variante einer Kopffeder 22j dargestellt, die sich wiederum in einer Nut 20 der Elementplatte 1 befindet und wiederum beim Verriegeln zweier Elementplatten in Richtung des Pfeils P verlagert wird und dabei aus der Nut 20 in Richtung des Pfeils P1 austritt. Hierbei erfolgt eine Parallelverschiebung der Kopffeder 22j, was auf zwei Nocken 43, 44 zurückzuführen ist, welche sich in Richtung des Nutgrunds der Nut 20 erstrecken. Ein erster Nocken 43 befindet sich im Übergangsbereich vom mittleren zum in der Bildebene linken Drittel der Kopffeder 22j. Der Nocken 43 ist dreieckförmig konfiguriert und ragt in eine Ausnehmung 45, welche kreisabschnittförmig konfiguriert ist. Die Ausnehmung 45 ist beispielsweise durch ein scheibenförmiges Sägeblatt erzeugt worden, welches in die Nut 20 eingeführt worden ist. Der Nocken 43 ist auf die Tiefe der Ausnehmung 45 abgestimmt, so dass die Kopffeder 22j im unverriegelten Zustand am Nutgrund anliegt. Dabei steht ihr vorderes Ende 24 nicht über die Elementplatte 1 vor. An diesem vorderen Ende befindet sich der zweite Nocken 44, welcher sich in den längsseitigen Kuppelkanal 35 erstreckt. Dieser Nocken 44 läuft auf der 90 Grad-Ecke im Übergangsbereich zwischen dem längsseitigen Kuppelkanal 35 und der stirnseitigen Nut 20 auf. Da der Verschiebeweg gering ist, ist dieser zweite Nocken 44 kürzer gestaltet bzw. steht nicht so weit in Richtung des Kuppelkanals 35 vor wie der Nocken 43 in der dafür vorgesehenen Ausnehmung 45. Die Geometrien der Nocken 43, 44 können so aufeinander abgestimmt sein, dass eine parallele Verschiebung der Kopffeder 22j möglich ist.
Anhand der Figur 18 ist ferner zu erkennen, dass mehrere Klemmzapfen 46 über die Länge der Kopffeder 22j verteilt angeordnet sind. Die Klemmzapfen 46 sind kleine Vorsprünge auf der Oberseite bzw. Unterseite der Kopffeder 22j und dienen dazu, diese in der dargestellten Position klemmend zu halten.
Die Ausführungsform der Figur 19 unterscheidet sich von derjenigen der Figur 18 dadurch, dass die Ausnehmung 45a weniger tief ist als bei der Ausführungsform der Figur 18 und dass der Nocken 43a entsprechend kürzer ist.
Ein weiterer Unterschied ist, dass bei dem Ausführungsbeispiel der Figur 19 zwei Ausnehmungen 43a und entsprechend zwei gerundete Ausnehmungen 45a und entsprechend zwei Nocken 43a vorgesehen sind, so dass die Kopffeder 22k dieses Ausführungsbeispiels eine zusätzliche Abstützung innerhalb der Nut 20 erfährt. Figur 20 zeigt die Kopffeder 22k in der Stirnansicht. Aus dieser Perspektive wird noch einmal deutlich, dass die Kopffeder 22k zur Ober- und Unterseite der Nut 20 hin gewellt ausgeführt ist, so dass die Kontaktflächen der Kopffeder 22k mit der Nut 20 reduziert werden, um die Reibung zu verringern. Zudem ist zu erkennen, dass die Klemmzapfen 46 sowohl an der Oberseite als auch an der Unterseite der Kopffeder 22k angeordnet sind und diese innerhalb der Nut 20 halten. Des Weiteren wird deutlich, dass der mit gestrichelter Linie eingezeichnete Nocken 43a eine Breite besitzt, die kleiner ist als die Breite des Grundkörpers der Kopffeder 22k, damit die Reibung zwischen dem Nocken 43a und der Auflauffläche innerhalb der Ausnehmung 45 möglichst gering ist.

### Bezugszeichen:

- 1: - Elementplatte
- 2: - Kopfseite
- 3: - Kopfseite
- 4: - Längsseite
- 5: - Längsseite
- 6: - Verriegelungsleiste
- 7: - Verriegelungsleiste
- 8: - Tragschicht
- 9: - Deckschicht
- 10: - Gegenzug
- 11: - 1. Kuppelkanal
- 12.: - 1. Kuppelwulst
- 13: - Unterseite v. 7
- 14: - Unterseite v. 1
- 15: - 2. Kuppelkanal
- 16: - 2. Kuppelwulst
- 17: - Flanke
- 18: - Flanke
- 19: - Nut
- 20: - Nut
- 21: - Sperrkanal
- 22: - Kopffeder
- 22a-k: - Kopffeder
- 23: - Nutmündung
- 24: - Ende
- 25: - Auflauffläche
- 26: - Schubabschnitt
- 26a: - Schubabschnitt
- 26b: - Schubabschnitt
- 26c: - Schubabschnitt
- 26d: - Schubabschnitt
- 27: - Keilkörper
- 27a: - Keilkörper
- 27b: - Keilkörper
- 27c: - Keilkörper
- 28: - Federschenkel
- 29: - Federschenkel
- 30: - Spitze
- 31: - Gelenk
- 32: - Schenkel
- 33: - Schenkel
- 34: - Stirnseite
- 35: - Kuppelkanal
- 36: - Sperrkörper
- 37: - Hülse
- 38: - Feder
- 39: - Boden
- 40: - Öffnung
- 41: - Tasche
- 42: - Sperrkörper
- 43: - Nocken
- 43a: - Nocken
- 44: - Nocken
- 45: - Ausnehmung
- 45a: - Ausnehmung
- 46: - Klemmzapfen

- P: - Pfeil
- P1: - Pfeil

## Patentansprüche

1. Fußbodenbelag bestehend aus im Verbund verlegbaren Elementplatten (1), die über an ihren Kopfseiten (2, 3) und ihren Längsseiten (4, 5) angeordnete Verriegelungsleisten (6, 7) miteinander in Eingriff gelangen, wobei in den Kopfseiten (2, 3) Nuten (19, 20) vorgesehen sind und wobei die Nuten (19, 20) zweier aneinander stoßender Kopfseiten (2, 3) fluchten und einen Sperrkanal (21) zur Aufnahme einer Kopffeder (22, 22a-k) bilden, wobei eine separate Kopffeder (22, 22a-k), die in einer kopfseitigen Nut (20) einer Elementplatte (1) vormontiert ist, dafür vorgesehen ist, die Elementplatten (1) gegeneinander zu verriegeln, **dadurch gekennzeichnet, dass** die Kopffeder (22, 22a-k) ein über die Öffnung in der Längsseite der Elementplatte (1) aus der Nut (20) vorstehendes Ende (24) als Betätigungsabschnitt aufweist, das dafür vorgesehen ist, eine in Längsrichtung der Kopffeder (22, 22a-k) wirkende Kraft auf die Kopffeder (22, 22a-k) auszuüben, um diese zur Verriegelung zumindest teilweise in eine korrespondierende Nut (19) der benachbarten Elementplatte (1) zu verlagern, wobei die Kopffeder (22, 22a-k) im vormontierten Zustand nicht über eine kopfseitige Nutmündung der Nut (20) vorsteht.

2. Fußbodenbelag nach Anspruch 1, **dadurch gekennzeichnet, dass** die Kopffeder (22, 22a-k) in einer Elementplatte (1) einer ersten Elementplattenreihe derart eingerichtet ist, dass die Verschiebung des vorstehenden Endes (24) der Kopffeder (22, 22a-k) in die Nut (20) zur Verriegelung mit einer angrenzenden Kopfseite (3) durch Eingriff einer Längsseite (4) einer weiteren Elementplatte (1) mit der vorhergehenden Elementplattenreihe erfolgt.

3. Fußbodenbelag nach Anspruch 1 oder 2, **dadurch gekennzeichnet, dass** die Kopffeder (22, 22a-k) aus einem thermoplastischen oder duroplastischen Kunststoff besteht.

4. Fußbodenbelag nach Anspruch 3, **dadurch gekennzeichnet, dass** die Kopffeder (22, 22a-k) aus einem faserverstärktem Kunststoff besteht.

5. Fußbodenbelag nach einem der Ansprüche 1 bis 4, **dadurch gekennzeichnet, dass** das Ende (24) der Kopffeder (22, 22a-k) derart bemessen ist, dass es nicht über eine äußerste Kante einer Elementplatte (1) vorsteht.

## Claims

1. Floor covering consisting of element plates (1) able to be laid in a linked manner which engage with one another via locking strips (6, 7) arranged on their head sides (2, 3) and their longitudinal sides (4, 5), wherein grooves (19, 20) are provided in the head sides (2, 3) and wherein the grooves (19, 20) of two head sides (2,3) abutting onto each other align and form a locking channel (21) for receiving a head tongue (22, 22a-k), wherein a separate head tongue (22, 22a-k) which is pre-assembled in a head-side groove (20) of an element plate (1) is provided to lock the element plates (1) against each other, **characterised in that** the head tongue (22, 22a-k) has an end (24) protruding from the groove (20) over the opening in the longitudinal side of the element plate (1) as an actuating section which is provided to exercise a force acting in the longitudinal direction of the head tongue (22, 22a-k) on the head tongue (22, 22a-k) in order to move this to lock at least partially in a corresponding groove (19) of the adjacent element plate (1), wherein the head tongue (22, 22a-k) does not protrude over a head-side groove aperture of the groove (20) in the pre-assembled state.

2. Floor covering according to claim 1, **characterised in that** the head tongue (22, 22a-k) is fitted in an element plate (1) of a first element plate row such that the displacement of the protruding end (24) of the head tongue (22, 22a-k) into the groove (20) for locking with an adjacent head side (3) occurs by engaging a longitudinal side (4) of a further element plate (1) with the preceding element plate row.

3. Floor covering according to claim 1 or 2, **characterised in that** the head tongue (22, 22a-k) consists of a thermoplastic or thermosetting plastic.

4. Floor covering according to claim 3, **characterised in that** the head tongue (22, 22a-k) consists of a fibre-reinforced plastic.

5. Floor covering according to any one of claims 1 to 4, **characterised in that** the end (24) of the head tongue (22, 22a-k) is measured in such a way that it does not protrude over an outermost edge of an element plate (1).

## Revendications

1. Revêtement de sol constitué de plaques élémentaires (1) à poser en combinaison, qui viennent en engagement mutuel par l'intermédiaire de barrettes de verrouillage (6, 7) agencées sur leurs côtés frontaux (2, 3) et sur leurs côtés longitudinaux (4, 5), dans lequel des rainures (19, 20) sont prévues dans les côtés frontaux (2, 3) et lesdites rainures (19, 20) de deux côtés frontaux (2, 3) en aboutement mutuel sont en alignement et réalisent un canal de blocage (21) pour la réception d'une languette frontale (22, 22a-k), dans lequel une languette frontale séparée (22, 22a-k), qui est montée préalablement dans une rainure (20) côté frontal d'une plaque élémentaire (1), est prévue pour verrouiller les plaques élémentaires (1) les unes par rapport aux autres, **caractérisé en ce que** les languettes frontales (22, 22a-k) comportent comme partie d'actionnement une extrémité (24) dépassant de la rainure (20) au-delà de l'ouverture dans le côté longitudinal de la plaque élémentaire (1), laquelle partie d'actionnement est prévue pour exercer une force agissant sur les languettes frontales (22, 22a-k) dans la direction longitudinale des languettes frontales (22, 22a-k) afin de déplacer celles-ci pour le verrouillage au moins en partie dans une rainure (19) correspondante de la plaque élémentaire (1) voisine, les languettes frontales (22, 22a-k) à l'état préalablement monté ne dépassant pas au-delà d'un débouché de rainure côté frontal de la rainure (20).

2. Revêtement de sol selon la revendication 1, **caractérisé en ce que** la languette frontale (22, 22a-k) est placée de telle sorte dans une plaque élémentaire (1) d'une première rangée de plaques élémentaires que la translation de l'extrémité dépassante (24) de la languette frontale (22, 22a-k) dans la rainure (20) en vue du verrouillage avec un côté frontal (3) adjacent s'effectue par engagement d'un côté longitudinal (4) d'une autre plaque élémentaire (1) avec la rangée de plaques élémentaires précédente.

3. Revêtement de sol selon la revendication 1 ou 2, **caractérisé en ce que** la languette frontale (22, 22a-k) est en une matière plastique thermoplastique ou thermodurcissable.

4. Revêtement de sol selon la revendication 3, **caractérisé en ce que** la languette frontale (22, 22a-k) est en une matière plastique renforcée par des fibres.

5. Revêtement de sol selon l'une des revendications 1 à 4, **caractérisé en ce que** l'extrémité (24) de la languette frontale (22, 22a-k) est dimensionnée de telle sorte qu'elle ne dépasse pas au-delà d'une arête, la plus à l'extérieur, d'une plaque élémentaire (1).
